# EUROPEAN PATENT SPECIFICATION

(11) **EP 0 824 102 B1**
(45) Date of publication and mention of the grant of the patent: **21.05.2003**
(21) Application number: 97113877.1
(22) Date of filing: 12.08.1997
(51) Int. Cl.: C07F 7/08, C07F 7/21

(54) **Alkyl substituted siloxanes and alkyl substituted polyether fluids**
Alkylsubstituierte Siloxane und alkylsubstituierte Polyetherflüssigkeiten
Siloxanes substitués par alkyl et liquides polyéther substitués par alkyl

(30) Priority: 13.08.1996 US 696417
(43) Date of publication of application: 18.02.1998
(73) Proprietor: DOW CORNING CORPORATION, Midland Michigan 48686-0994 (US)
(72) Inventor: Cobb, Vicky Sue, Elsie, Michigan 48831 (US); Legrow, Gary Edward, Newberry, Florida 32669 (US)
(74) Representative: Fleischer, Holm Herbert, Dr.

(56) References cited:
- EP-A- 0 503 826
- US-A- 3 088 964
- US-A- 5 488 124

## Description

This invention introduces a family of alkyl substituted siloxanes and alkyl substituted polyether fluids as new compositions of matter.

US Patent 5,446,185 describes a family of new alkylhydrido siloxanes including comonomers of the formula RSi(OSiMe₂H)₃, oligomers of the formula (HMe₂SiO)₂-Si(R)-O-Si(R)-(OSiMe₂H)₂ and higher molecular weight siloxanes of the formula RSi[(OSiMe₂)ₓOSiMe₂H]₃ or [HMe₂SiO(Me₂SiO)ₓ]₂Si(R)O(R)Si[(OSiMe₂)ₓOSiMe₂H]₂; in which Me is, and hereafter denotes, methyl; R is a C₂ to C₁₈ straight-chain or branched-chain alkyl substituent; and x has a value of 1-200.

US Patent 5,488,124 teaches alkylpolyether siloxane compositions in general, but does not teach the specific compositions of the claimed invention.

Our invention is an improvement over the prior art because a new family of alkyl substituted siloxanes and alkyl substituted polyether fluids are provided by hydrosilylation of the alkylhydrido siloxanes of US Patent No. 5,446,185. These new products are useful in personal care compositions, lubricants, polishes, paint additives, hydrophobing agents, emulsifiers and polyurethane foam stabilizers.

The new alkyl substituted siloxanes claimed herein are compounds covered by one of the formulas: RSi(OSiMe₂Q)₃, (QMe₂SiO)₂Si(R)-O-Si(R) (OSiMe₂Q)₂, RSi [(OSiMe₂)ₓOSiMe₂Q]₃ and [QMe₂SiO(Me₂SiO)ₓ]₂Si(R)O(R)Si[(OSiMe₂)ₓOSiMe₂Q]₂ In these formulas, Me is methyl; R is a C₂ to C₁₈ straight-chain or branched-chain alkyl substituent; x has a value of 1-200; and Q is independently the same or different alkyl, aralkyl or polyether group, with the proviso that at least one Q is an alkyl or aralkyl group.

When Q is an alkyl group, Q is generally described as a linear or branched carbon chain having from 2 to 80 carbon atoms. Preferred alkyl groups are octyl, hexadecyl, octadecyl and tridecyl. Q is also an aralkyl group, having the formula (CHX)ₐ-C₆H₅, where X is hydrogen atom or alkyl group having at least 2 carbon atoms. Preferred aralkyl groups are alpha-methyl styryl or styryl substituted groups. Q can also be a radical containing polyether groups, such as (poly) (oxyethylene), (poly)(oxypropylene) and (poly) (oxybutylene) or any combinations thereof. A representative Q radical is
- (CH₂)_{y}(OCH₂CH₂)ₐ(OCH₂CH(CH₃))_{b}[OCH₂CH(CH₂CH₃)]_{c}OR', where R' is hydrogen atom; an alkyl radical such as methyl, ethyl, propyl and butyl; an aryl radical such as phenyl; an aralkyl radical such as benzyl; and an acyl radical such as acetyl. The integer y is 3-6; a is 0-120; b is 0-100; and c is 0-50; with the proviso that a, b and c, cannot all be zero.

The present invention also teaches a more efficient process for preparation of alkyl substituted siloxanes and alkyl substituted polyether fluids. In the art, a two step process was required to achieve complete reaction of SiH on the molecular backbone.

Siloxanes of this invention are prepared by hydrosilylation of alkylhydrido siloxanes with alkenyl ether terminated organic oxyalkylene compounds. Alkylhydrido siloxanes such as RSi(OSiMe₂H)₃ or (HMe₂SiO)₂Si(R)-O-Si(R)-(OSiMe₂H)₂ are prepared in high yield by hydrolysis of the corresponding chlorosilanes. More complete details of such a reaction are given in US Patent 5,446,185.

The reaction is briefly depicted as:

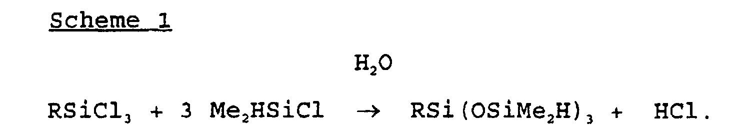

In "Scheme 1", the amount of RSi(OSiMe₂H)₃ obtained in the hydrolysis is dependent upon the temperature at which the reaction is conducted. Where R is n-propyl, hereinafter represented by Pr and the temperature is maintained at slightly below 15°C., 83% of the product is RSi(OSiMe₂H)₃; at 30°C., 79% of the product is RSi(OSiMe₂H)₃; and at 40°C., 47% of the product is RSi(OSiMe₂H)₃. At higher temperatures (40°C.+), larger amounts of (HMe₂SiO)₂-Si(R)-O-Si(R)(OSiMe₂H)₂ and higher molecular weight species are formed.

The products RSi(OSiMe₂H)₃ and (HMe₂SiO)₂Si (R)-O-(R)Si(OSiMe₂H)₂ from "Scheme 1", are useful in the preparation of higher molecular weight siloxane species. These higher molecular weight materials are prepared by an acid catalyzed ring opening of cyclic siloxanes, such as a dimethylcyclosiloxane, followed by insertion into RSi(OSiMe₂H)₃ or (HMe₂SiO)₂Si(R)O(R)Si(OSiMe₂H)₂. Such a process is also described in greater detail by US Patent 5,446,183 and is briefly depicted below.

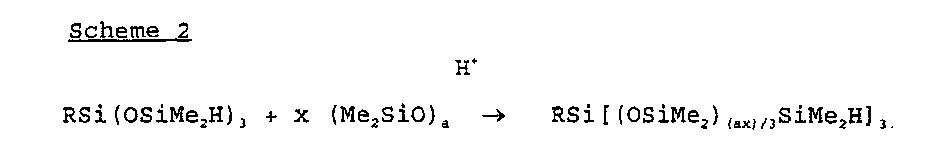

The acid catalyst in "Scheme 2" is hydrochloric, sulfuric, phosphoric, oxalic, acetic, trichloroacetic or trifluoromethane sulfonic acids. The method of "Scheme 2" is conducted by creating a mixture of the cyclic siloxane (Me₂SiO)ₐ, RSi(OSiMe₂H)₃ or (HMe₂SiO)₂Si(R)O(R)Si(OSiMe₂H)₂, (or mixtures thereof) and the acid catalyst. The mixture is next heated with agitation at a polymerization reaction temperature, until essentially all of the cyclic siloxane is reacted. The time required varies depending on the reactants and reaction conditions. The polymerization reaction of "Scheme 2" is stopped at the desired level of conversion of cyclic siloxane by using methods known in the art, such as neutralization of the catalyst by the addition of an equal, or slightly greater than stoichiometric, amount of base. A weak base is normally used to neutralize the reaction.

The siloxanes of "Scheme 1" and "Scheme 2" include comonomers, oligomers and higher molecular weight siloxane species and are used as intermediates in the preparation of either our alkyl substituted siloxanes or our alkyl substituted polyether fluids. The R group in "Scheme 1" and "Scheme 2" is a C₂ to C₁₈ straight-chain (unbranched) or branched-chain alkyl substituent. Suitable R groups are ethyl; n-propyl; isopropyl; butyl; 2-methylpropyl; pentyl; 2-methylbutyl; 2,2-dimethylpropyl; hexyl; 2-methylpentyl; 3-methylpentyl; 2,2-dimethylbutyl; 2,3-dimethylbutyl; heptyl; 2-methylhexyl; 3-methylhexyl; 2,2-dimethylpentyl; 2,3-dimethylpentyl; 2,4-dimethylpentyl; 3,3-dimethylpentyl; 3-ethylpentyl; 2,2,3-trimethylbutyl; octyl; nonyl; decyl; undecyl; dodecyl; tridecyl; tetradecyl; pentadecyl; hexadecyl; heptadecyl and octadecyl.

The cyclic siloxanes most suitable for "Scheme 2" are (i) hexamethylcyclotrisiloxane with a boiling point of 133°C. and the formula [(Me₂)SiO]₃; (ii) octamethylcyclotetrasiloxane with a boiling point of 171°C. and the formula [(Me₂)SiO]₄; (iii) decamethylcyclopentasiloxane with a boiling point of 205°C. and the formula [(Me₂)SiO]₅; and (iv) dodecamethylcyclohexasiloxane with a boiling point of 245°C. and the formula [(Me₂)SiO]₆.

In our process of preparing alkyl substituted siloxanes or alkyl substituted polyether fluids, one or more unsaturated alkyl or aralkyl groups and possibly an unsaturated polyether, are reacted via a hydrosilylation reaction with one of the above described alkylhydrido siloxanes containing the ≡SiH group. In any case, Q will be independently the same or different alkyl, aryl, aralkyl or polyether group, with the proviso that at least one Q is an alkyl or aralkyl group.

In the case where a particular Q group is an alkyl group, the compositions of this invention are prepared by reacting the above described ≡SiH containing siloxanes with an unsaturated alkyl compound having from 2 to 30+ carbon atoms.

These unsaturated alkyl compounds are generally represented by the formula CH₂=CHR' where R' is a linear or branched alkyl group having up to 28 carbon atoms.

Representative Q groups include octyl, dodecyl, hexadecyl, octadecyl and tridecyl.

It is expected that in a given preparation of the compositions of our claimed invention, the unsaturated alkyl compounds will be the same or different, i.e. represented by the same or different R' groups.

An example of where the R' groups are the same is illustrated below.

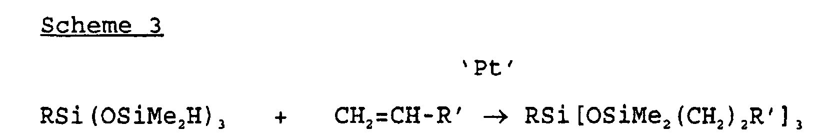

The siloxane portion of the product is trifunctional, as shown above, or tetrafunctional, as in [R¹Me2SiO(SiMe₂O)ₓ]₂SiR-O-RSi[(OSiMe2)ₓOSiMe2R¹]₂. In the unsaturated hydrocarbons R' is hydrogen, linear or branched alkyl and aralkyl.

In addition, two or more different types of hydrocarbon groups can be attached to the same siloxane to yield a silicone organic copolymer consisting of the branched alkyl (R) siloxane and two different hydrocarbons, R'. An example of how such a material is prepared is shown below. 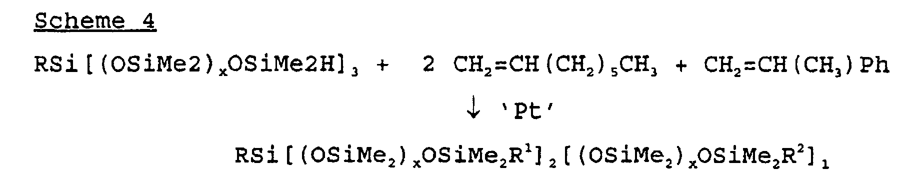 where, for example, R is C₂ to C₁₈ straight chain or branched alkyl, Me is methyl, Ph is, and hereafter denotes, phenyl, R¹ is (CH₂)₇CH₃, R² is (CH₂CH(CH₃)Ph and these groups are randomly arranged on the siloxane in a ratio of 2:1.

The degree of substitution of the ≡SiH bearing siloxanes are generally controlled by the ratio of ≡SiH to the alkenyl groups of each different unsaturated compound bearing the R' group.

Q can also be derived from an organic oxyalkylene compound which is alkenyl ether terminated. Suitable compounds contain at least C₃ to C₁₀ carbons in the alkenyl group and examples of useful groups are allyl, isopropenyl, 2-butenyl, 3-butenyl or hexenyl. Allyl is the most preferred alkenyl group and representative allyl ether terminated organic (poly)(oxyalkylene) compounds are: H₂C=CH-CH₂-O- (CH₂-CH₂O)ₘ-R''; H₂C=CH-CH₂-O- [CH₂-CH(CH₃)O]ₙ-R''; and H₂C=CH-CH₂-O-(CH₂-CH₂O)ₘ-[CH₂-CH(CH₃)O]ₙ-R''.

In these formulas, m is 1-120; n is 1-100; and R'' is hydrogen atom; an alkyl radical such as methyl, ethyl, propyl or butyl; an aryl radical such as phenyl; an aralkyl radical such as benzyl; or an acyl radical such as acetyl.

It is preferred to conduct the hydrosilylation reaction with an allyl to ≡SiH ratio of 1.0 to 1.2, although other ratios can be employed. The alkylpolyether siloxane products of the hydrosilylation reaction are made by reacting the allyl ether of the desired (poly)(oxyalkylene)compound with the corresponding siloxane containing ≡SiH groups. This reaction is performed by heating a mixture of the reactants in the presence of a platinum catalyst such as platinum dispersed on an inert carrier or a compound of platinum such as chloroplatinic acid, at temperatures from 30-100°C.

The final products are prepared by hydrosilylation of the corresponding alkylhydrido siloxanes with alkenyloxy polyethers and alpha olefins. Representative hydrosilylation reactions of this invention are depicted in Schemes 5 and 6 as follows:

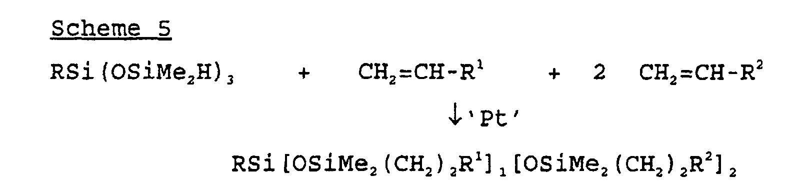

The siloxane portion of the product can be trifunctional, as shown above, or tetrafunctional, as in [R¹Me₂SiO(SiMe₂O)ₓ]₂SiR-O-RSi[(OSiMe₂)ₓOSiMe₂R¹]₂. In the unsaturated hydrocarbons R¹ is hydrogen, linear or branched alkyl or aralkyl. The polyethers, R², are (poly)(oxyethylene), (poly)(oxypropylene), (poly)(oxybutylene) or any combination. In addition, different types of hydrocarbon groups or polyether groups can be attached to the same siloxane to yield a silicone organic polymer consisting of the branched, alkyl (R) substituted siloxane and two or more different hydrocarbons, R¹, or two or more different polyether groups, R². An example of how such a material is prepared is shown below: 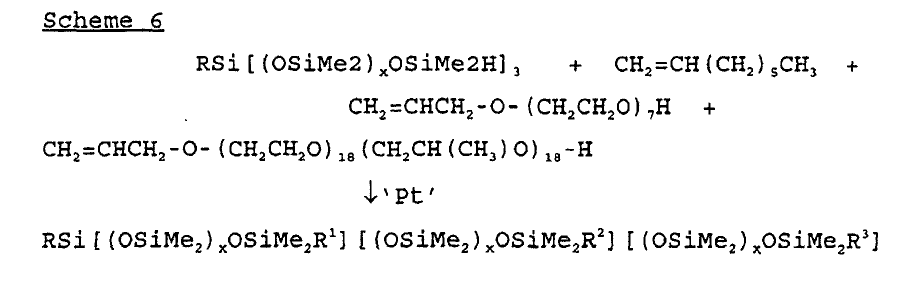 where R¹ is (CH₂)₇CH₃, R² is CH₂=CHCH₂-O-(CH₂CH₂O)₇H, R³ is CH₂=CHCH₂-O- (CH₂CH₂O)₁₈(CH₂CH(CH₃)O)₁₈-H and these groups are randomly arranged on the siloxane in a ratio of 1:1:1.

We have surprisingly found that the products made herein are readily made by a "one step" process, i.e., the hydrocarbon components are added to the siloxane polymer simultaneously, rather than in two steps as in the prior art. Moreover, only a small excess of the hydrocarbon "Q" groups need be present during the reaction, as opposed to the large excess of hydrocarbon required for reaction completion in art.

Hydrosilylation catalysts are well known in the art and the following patents contain detailed descriptions regarding their preparation and use: US Patents 2,823,218; 3,419,359; 3,445,420; 3,697,473; 3,814,731; 3,890,359 and 4,123,604. Many of the catalysts known in the art require the reactants to be heated for a reaction to occur. When such catalysts are employed, this former requirement must be taken into consideration.

The concentration of the catalyst employed is easily determined by routine experimentation. Typically, however, the effective amount of catalyst is in a range to provide from 1-1,000 parts per million (ppm) of platinum metal by weight in the claimed compositions of this invention.
In the following examples viscosities were measured at 25°C unless otherwise stated.

### EXAMPLE I

### Preparation of PrSi(OSiMe₂H)₃, n-propyltris(dimethylsiloxy)silane.

A mixture of PrSiCl₃ (59.92 g, 0.338 mole) and Me₂HSiCl (95.90 g, 1.014 moles) was added drop-wise to a 3-necked round bottom flask containing ice water (166.0 g, 9.22 moles). The flask was fitted with a thermometer, a mechanical stirrer and a pressure equalizing addition funnel. The above chlorosilanes were added drop-wise through the addition funnel at a rate to maintain a temperature in the flask of slightly below 15°C. The solution was vigorously mixed throughout this addition. The solution was stirred for 30 minutes after completion of said addition. An aqueous layer was drawn off, followed by several NaHCO₃ washes and then several water washes until neutral to pH paper tests. The siloxane was dried using MgSO₄ overnight and filtered under N₂ pressure, yielding a clear, colorless liquid. The final product contained 83% of PrSi(OSiMe₂H)₃; 9% of (HMe₂SiO)₂Si(Pr)-OSi(Pr) (OSiMe₂H)₂ and 8% of other siloxane impurities. Product characterizations included Si-29 Nuclear Magnetic Resonance (NMR), Gas Chromatography/Mass Spectrometry (GC/MS) and Gas Chromatography/Flame Ionization Detection (GC/FID).

### EXAMPLE II

Example I was repeated, except room temperature water was used instead of ice water and the temperature was allowed to rise to 30°C. The final product contained 79% of PrSi(OSiMe₂H)₃, 12% of (HMe₂SiO)₂Si(Pr)OSi (Pr)(OSiMe₂H)₂ and 9% of other siloxane impurities.

### EXAMPLE III

Example I was again repeated, except room temperature water was again used instead of ice water and the temperature was allowed to rise to 40°C. The final product contained 47% of PrSi(OSiMe₂H)₃, 30% of (HMe₂SiO)₂Si(Pr)OSi(Pr) (OSiMe₂H)₂ and 23% of other siloxane impurities.

### EXAMPLE IV

### Preparation of PrSi[(OSiMe₂)_{3.5} OSiMe₂H]₃

A solution of n-propyltris(dimethylsiloxy)silane PrSi(OSiMe₂H)₃ (18.94 g, 0.064 mole) prepared in Example I, (Me₂SiO)₄ cyclosiloxane (49.82 g, 0.672 mole) and 41 µl of trifluoromethane sulfonic acid, was heated to 70°C. The flask was fitted with a water cooled condensing column, a magnetic stirrer and a thermometer. The flask was flushed with N₂ prior to heating, followed by N₂ positive pressure through the top of the condenser. After heating the flask at 70°C. for four hours, the solution was cooled to room temperature, followed by the addition of NaHCO₃ (1.0 g) and diatomaceous earth (Celite™) (1.0 g). The mixture was stirred for 4 hours, followed by filtration under N₂ pressure and yielded a clear, colorless liquid. The final average structure determined by Si-29 NMR was (PrSi)_{1.0}[(OSiMe₂)_{3.5}OSiMe₂H]₃.0. In that structure, the value "1.0" was plus or minus 0.2; the value "3.5" was plus or minus 0.5; and the value "3.0" was plus or minus 0.2. Dimethylcyclic siloxanes were also present in the product.

### EXAMPLE V

### Preparation of PrSi{(OSiMe₂R¹)₁(OSiMe₂R²)₂}, with R¹ = (CH2)₇CH₃ and R² = (CH₂)₃O(CH₂CH₂O)₇H.

CH₂=CHCH₂O(CH₂CH₂O)₇H (62.78 g, 0.178 mole) and a platinum catalyst (10 ppm) were placed in a 3-necked, roundbottom flask equipped with a thermometer, mechanical stirrer and a claisen adapter fit with a water cooled condenser and a pressure equalizing addition funnel. Dropwise addition of PrSi (OSiMe₂H)₃ (27.62 g, 0.086 mole) was adjusted to maintain the temperature below 90°C. throughout the addition. The temperature was maintained at 90°C. for several hours. Dropwise addition of 1-octene (9.61 g, 0.086 mole) was followed by heating at 100°C. until no SiH was observed in the infrared spectrum. Removal of excess olefin under reduced pressure yielded a clear, liquid. Viscosity was 321 mPa·s.

The following example demonstrates a one step process for the preparation of alkyl substituted siloxanes and alkyl substituted polyether fluids, rather than the two step processes previously described.

### EXAMPLE VI

### Preparation of PrSi{(OSiMe₂)₆ (OSiMe₂R¹)₁ (OSiMe₂R²)₂}, with R¹ = (CH2)₇CH₃ and R² = (CH₂)₃O(CH₂CH₂O)₇H

PrSi{(OSiMe₂)₆(OSiMe₂H)}₃ (65.87 g, 0.042 mole) and a platinum catalyst (10 ppm) were placed in a 3-necked round bottom flask equipped with a thermometer, mechanical stirrer and a claisen adapter fit with a water cooled condenser and a pressure equalizing addition funnel and heated to 90°C. Dropwise addition of a mixture of CH₂=CHCH₂O(CH₂CH₂O)₇H (30.50 g, 0.083 mole) and 1-octene (6.53 g, 0.058 mole) resulted in an exotherm. The temperature was maintained at 90°C. for four hours, after which additional 1-octene (3.0 g, 0.027 mole) was added to the flask. The solution was heated until the SiH level reached 6 ppm as measured by infrared spectroscopy. Removal of excess olefin under reduced pressure yielded a clear, liquid. Brookfield™ viscosity was 240 mPa·s (cp).

### EXAMPLE VII

### Preparation of PrSi(OSiMe₂R)₃, with R = (CH2)₅CH₃

1-hexene (55.18 g, 0.657 mole) and a heterogeneous platinum catalyst (50 ppm) were weighed into a 3-necked round bottom flask equipped with a thermometer, mechanical stirrer and a claisen adapter fit with a water cooled condenser and a pressure equalizing addition funnel. Dropwise addition of PrSi(OSiMe₂H)₃ (54.01 g, 0.182 mole) was adjusted to maintain the temperature below 90°C. throughout the addition. The temperature was maintained at 90°C. until no SiH was observed in the infrared spectrum. Removal of excess olefin under reduced pressure, followed by filtration, yielded a clear liquid with solubility in both mineral oil and polydimethylsiloxane. Viscosity was 9.5 mPa·s (cp).

### EXAMPLE VIII

### Preparation of PrSi(OSiMe₂R)₃, with R = (CH₂)₃₀₊CH₃

C30+ alpha olefin (112.24 g, 0.217 mole) and a heterogeneous platinum catalyst (50 ppm) were weighed into a 3-necked round bottom flask equipped with a thermometer, mechanical stirrer and a water cooled condenser. PrSi(OSiMe₂H)₃ (17.56 g, 0.055 mole) was added dropwise to the 80°C mixture. The temperature was increased and maintained at 110°C. until the SiH level was below 5 ppm. Filtration yielded the product, a waxy solid at room temperature. Melting range was 59-63°C.

### EXAMPLE IX

### Preparation of PrSi[(OSiMe₂)₅OSiMe₂R]₃, with R = CH₂CH(CH₃)Ph

Alpha methyl styrene (30.52 g, 0.259 mole) and platinum catalyst were weighed into a 3-necked round bottom flask equipped with a thermometer, mechanical stirrer and an addition funnel. PrSi[(OSiMe₂]₅OSiMe₂H]₃ (79.66 g, 0.057 mole) was added dropwise to the mixture at a rate to maintain an exotherm, at approximately 100°C. The addition funnel was replaced with a water cooled condenser, the temperature was increased to 110°C. and maintained for 2 hours. Removal of excess alpha methyl styrene under reduced pressure resulted in a clear liquid. The material was characterized by infrared spectroscopy.

### EXAMPLE X

### Preparation of Dodecyl-Si[(OSiMe₂R)₃, with R = (CH₂)₁₇CH₃

1-octadecene (231.04 g, 0.917 mole) and platinum catalyst were weighed into a 3-necked round bottom flask equipped with a thermometer, mechanical stirrer and a water cooled condenser. DodecylSi(OSiMe₂H)₃ (107.47 g, 0.255 mole) was added dropwise to the mixture at a rate to maintain an exotherm, approximately 110°C. The addition funnel was replaced with a water cooled condenser, the temperature was maintained at 110°C for 2 hours. Additional 1-octadecene (77.00 g, 0.0.306 mole) was added and the solution was heated at 110°C. until the SiH level was 1 ppm by infrared spectroscopy. Removal of excess octadecene under reduced pressure resulted in a golden colored liquid. The final product was a waxy solid.

### EXAMPLE XI

### Preparation of PrSi[(OSiMe₂)₅(OSiMe₂R)]₃, with R = (CH₂)₁₇CH₃

1-octadecene (42.35 g, 0.168 moles) and platinum catalyst were weighed into a three necked round bottom flask equipped with a thermometer, mechanical stirrer and an addition funnel. PrSi[(OSiMe₂)₅(OSiMe₂H)]₃ (64.71 g, 0.047 mole) was added dropwise to the mixture at a rate to maintain the temperature near 90°C. The addition funnel was replaced with a water cooled condenser. The temperature was maintained at 90°C. until the SiH level was below 5 ppm. Removal of excess octadecene under reduced pressure, followed by filtration yielded the product, a clear liquid. Viscosity was 36.1 mPa·s (cp).

### EXAMPLE XII

### Preparation of PrSi[(OSiMe₂)₁₀₀OSiMe₂R]₃, with R = (CH₂)₇CH₃.

1-octene (22.93 g, 0.205 mole) and platinum catalyst were weighed into a 3-necked round bottom flask equipped with a thermometer, mechanical stirrer and an addition funnel. PrSi[(OSiMe₂)₁₀₀OSiMe₂H]₃ (982.80 g, 0.051 mole) was added dropwise to the mixture at a rate to maintain the temperature near 90°C. The addition funnel was replaced with a water cooled condenser. The temperature was maintained at 80°C. until the SiH level was below 5 ppm. Removal of excess octene under reduced pressure yielded the product, a clear liquid. Brookfield™ viscosity of the product was 710 mPa·s (cp).

## Claims

1. Compounds selected from the group consisting of RSi(OSiMe₂Q)₃, (QMe₂SiO)₂Si(R)-O-Si(R)(OSiMe₂Q)₂, RSi[(OSiMe₂)ₓOSiMe₂Q]₃ and [QMe₂SiO(Me₂SiO)ₓ]₂Si(R)-O(R)Si[(OSiMe₂)ₓOSiMe₂Q]₂, wherein Me is methyl; R is a C₂ to C₁₈ straight-chain or branched-chain alkyl of at least two carbon atoms; x has a value of 1-200; and Q is independently the same or different alkyl, aralkyl or polyether group, with the proviso that at least one Q is an alkyl of at least two carbon atoms or aralkyl group.

2. Compounds according to claim 1 in which R is selected from the group consisting of ethyl; n-propyl; isopropyl; butyl; 2-methylpropyl; pentyl; 2-methylbutyl; 2,2-dimethylpropyl; hexyl; 2-methylpentyl; 3-methylpentyl; 2,2-dimethylbutyl; 2,3-dimethylbutyl; heptyl; 2-methylhexyl; 3-methylhexyl; 2,2-dimethylpentyl; 2,3-dimethylpentyl; 2,4-dimethylpentyl; 3,3-dimethylpentyl; 3-ethylpentyl; 2,2,3-trimethylbutyl; octyl; nonyl; decyl; undecyl; dodecyl; tridecyl; tetradecyl; pentadecyl; hexadecyl; heptadecyl and octadecyl.

3. Compounds according to claim 1 in which at least one Q is an alkyl group having 2 to 80 carbon atoms.

4. Compounds according to claim 1 in which at least one or two Q groups are the same or different polyether groups having the general formula
- (CH₂)_{y}(OCH₂CH₂)ₐ(OCH₂CHCH₃)_{b}[OCH₂CH(CH₂CH₃)]_{c}OR'
wherein R' is hydrogen atom, an alkyl radical, an aryl radical, an aralkyl radical or an acyl radical; y is 3-6; a is 0-120; b is 0-100; and c is 0-50; with the proviso that a, b and c, cannot all be zero.

5. Compounds according to claim 1 in which R is an n-propyl or n-octyl group.

6. Compounds according to claim 1 in which at least one Q group is an alpha methyl styryl group.

7. A process for preparing a compound according to any of claims 1-6 by reacting in an one step hydrosilylation reaction an alkylhydridosiloxane selected from the group consisting of RSi(OSiMe₂H)₃, (HMe₂SiO)₂Si(R)-O-Si(R)(OSiMe₂H)₂, RSi[(OSiMe₂)ₓOSiMe₂H]₃ and [HMe₂SiO(Me₂SiO)ₓ]₂Si(R)-O(R)Si[(OSiMe₂)ₓOSiMe₂H]₂, wherein Me is methyl; R is a C₂ to C₁₈ straight-chain or branched-chain alkyl of at least two carbon atoms; x has a value of 1-200; with one or more different compounds having the formula CH₂=CHR¹ wherein R¹ is independently selected at each occurrence from hydrogen, alkyl, aryl, aralkyl or a polyether group with the proviso that at least one R¹ is hydrogen, an alkyl, an aryl or an aralkyl.

## Patentansprüche

1. Verbindungen, ausgewählt aus der Gruppe bestehend aus RSi(OSiMe₂Q)₃, (QMe₂SiO)₂SiO(R)-O-Si(R)(OSiMe₂Q)₂, RSi[(OSiMe₂)ₓ-OSiMe₂Q]₃ und [QMe₂SiO(Me₂SiO)ₓ]₂Si(R)-O(R)Si[OSiMe₂)ₓOSiMe₂Q]₂, worin Me Methyl ist, R eine geradkettige oder verzweigte C₂- bis C₁₈-Alkylgruppe mit wenigstens 2 Kohlenstoffatomen ist, x einen Wert von 1 bis 200 aufweist und Q unabhängig voneinander die gleiche oder eine unterschiedliche Alkyl-, Aralkyl- oder Polyethergruppe ist, unter der Bedingung, dass wenigstens ein Q eine Alkylgruppe mit wenigstens 2 Kohlenstoffatomen oder eine Aralkylgruppe ist.

2. Verbindungen nach Anspruch 1, in denen R ausgewählt ist aus der Gruppe bestehend aus Ethyl, n-Propyl, Isopropyl, Butyl, 2-Methylpropyl, Pentyl, 2-Methylbutyl, 2,2-Dimethylpropyl, Hexyl, 2-Methylpentyl, 3-Methylpentyl, 2,2-Dimethylbutyl, 2,3-Dimethylbutyl, Heptyl, 2-Methylhexyl, 3-Methylhexyl, 2,2-Dimethylpentyl, 2,3-Dimethylpentyl, 2,4-Dimethylpentyl, 3,3-Dimethylpentyl, 3-Ethylpentyl, 2,2,3-Trimethylbutyl, Octyl, Nonyl, Decyl, Undecyl, Dodecyl, Tridecyl, Tetradecyl, Pentadecyl, Hexadecyl, Heptadecyl und Octadecyl.

3. Verbindungen nach Anspruch 1, in denen wenigstens ein Q eine Alkylgruppe mit 2 bis 80 Kohlenstoffatomen ist.

4. Verbindungen nach Anspruch 1, in denen wenigstens eine oder zwei Gruppen gleiche oder unterschiedliche Polyethergruppen der allgemeinen Formel -(CH₂)_{y}(OCH₂CH₂)ₐ(OCH₂CHCH₃)_{b}[OCH₂CH(CH₂CH₃)]_{c}OR' sind, worin R' ein Wasserstoffatom, ein Alkylrest, ein Arylrest, ein Aralkylrest oder ein Acylrest ist, y gleich 3 bis 6 ist, a gleich 0 bis 120 ist, b gleich 0 bis 100 ist und c gleich 0 bis 50 ist, unter der Voraussetzung, dass a, b und c nicht alle null sein können.

5. Verbindungen nach Anspruch 1, in denen R eine n-Propyl- oder n-Octylgruppe ist.

6. Verbindungen nach Anspruch 1, in denen wenigstens eine Q-Gruppe eine α-Methylstyrylgruppe ist.

7. Verfahren zur Herstellung einer Verbindung nach einem der Ansprüche 1 bis 6 durch Umsetzen in einer 1-Schritt-Hydrosilylierungsreaktion eines Alkylhydridosiloxans ausgewählt aus der Gruppe bestehend aus RSi(OSiMe₂H)₃, (HMe₂SiO)₂Si(R)-O-Si(R)(OSiMe₂H)₂, RSi[(OSiMe₂)ₓOSiMe₂H]₃ und [HMe₂SiO(Me₂SiO)ₓ]₂Si(R)-O(R)Si[OSiMe₂)ₓOSiMe₂H]₂, worin Me Methyl ist, R eine geradkettige oder verzweigte C₂- bis C₁₈-Alkylgruppe mit wenigstens 2 Kohlenstoffatomen ist, x einen Wert von 1 bis 200 aufweist, mit einer oder mehreren unterschiedlichen Verbindungen der Formel CH₂=CHR¹, worin R¹ unabhängig voneinander bei jedem Auftreten ausgewählt ist aus Wasserstoff, Alkyl, Aryl, Aralkyl oder einer Polyethergruppe, unter der Bedingung, dass wenigstens ein R¹ Wasserstoff, ein Alkyl, ein Aryl oder ein Aralkyl ist.

## Revendications

1. Composés choisis dans le groupe constitué par RSi(OSiMe₂Q)₃, (QMe₂SiO)₂Si(R)-O-Si(R) (OSiMe₂Q)₂, RSi[(OSi-Me₂)ₓOSiMe₂Q]₃ et [QMe₂SiO(Me₂SiO)ₓ]₂Si(R)-O-(R)Si[(OSi-Me₂)ₓOSiMe₂Q]₂, où Me est un groupe méthyle ; R est un groupe alkyle en C₂ à C₁₈ à chaîne linéaire ou chaîne ramifiée d'au moins deux atomes de carbone ; x a une valeur de 1 à 200 ; et Q est indépendamment le même groupe alkyle, aralkyle ou polyéther ou des groupes alkyle, aralkyle ou polyéther différents, étant entendu qu'au moins un Q est un groupe alkyle d'au moins deux atomes de carbone ou un groupe aralkyle.

2. Composés selon la revendication 1, dans lesquels R est choisi dans le groupe constitué par un groupe éthyle ; n-propyle ; isopropyle ; butyle ; 2-méthylpropyle ; pentyle ; 2-méthylbutyle ; 2,2-diméthylpropyle ; hexyle ; 2-méthylpentyle ; 3-méthylpentyle ; 2,2-diméthylbutyle ; 2,3-diméthylbutyle ; heptyle ; 2-méthylhexyle ; 3-méthylhexyle ; 2,2-diméthylpentyle ; 2,3-diméthylpentyle ; 2,4-diméthylpentyle ; 3,3-diméthylpentyle ; 3-éthylpentyle ; 2,2,3-triméthylbutyle ; octyle ; nonyle ; décyle ; undécyle ; dodécyle ; tridécyle ; tétradécyle ; pentadécyle ; hexadécyle ; heptadécyle et octadécyle.

3. Composés selon la revendication 1, dans lesquels au moins un Q est un groupe alkyle ayant 2 à 80 atomes de carbone.

4. Composés selon la revendication 1, dans lesquels au moins un ou deux groupes Q sont des groupes polyéthers identiques ou différents ayant la formule générale
- (CH₂)_{y}(OCH₂CH₂)ₐ(OCH₂CHCH₃)_{b}[OCH₂CH(CH₂CH₃)]_{c}OR'
où R' est un atome d'hydrogène, un radical alkyle, un radical aryle, un radical aralkyle ou un radical acyle ; y est 3 à 6 ; a est 0 à 120 ; b est 0 à 100 ; et c est 0 à 50 ; étant entendu que a, b et c ne peuvent pas tous être zéro.

5. Composés selon la revendication 1, dans lesquels R est un groupe n-propyle ou n-octyle.

6. Composés selon la revendication 1, dans lesquels au moins un groupe Q est un groupe alpha méthyl styryle.

7. Procédé pour préparer un composé selon l'une quelconque des revendications 1 à 6, en faisant réagir dans une réaction d'hydrosilylation en une étape un alkylhydrurosiloxane choisi dans le groupe constitué par RSi(OSiMe₂H)₃, (HMe₂SiO)₂Si(R)-O-Si (R) (OSiMe₂H)₂, RSi[(OSiMe₂)ₓOSiMe₂H]₃ et [HMe₂SiO(Me₂SiO)ₓ]₂Si(R)-O(R)Si[(OSiMe₂)ₓOSiMe₂H]₂, où Me est un groupe méthyle ; R est un groupe alkyle en C₂ à C₁₈ à chaîne linéaire ou chaîne ramifiée d'au moins deux atomes de carbone ; x a une valeur de 1 à 200 ; avec un ou plusieurs composés différents ayant la formule CH₂=CHR¹ où R¹ est indépendamment choisi à chaque occurrence parmi l'hydrogène, un groupe alkyle, aryle, aralkyle ou polyéther, étant entendu qu'au moins un R¹ est de l'hydrogène, un groupe alkyle, aryle ou aralkyle.
